# EUROPEAN PATENT SPECIFICATION

(11) **EP 4 293 578 B1**
(45) Date of publication and mention of the grant of the patent: **09.12.2026**
(21) Application number: 23170342.2
(22) Date of filing: 27.04.2023
(51) Int. Cl.: G06N 3/063, G06F 9/50, G06N 3/045, G06N 3/098

(54) **TRAINING LARGE DL MODELS VIA SERVERLESS ARCHITECTURE USING CLOUD STORAGE SERVICES-BASED COMMUNICATION CHANNEL**
TRAINIEREN GROSSER DL-MODELLE ÜBER SERVERLOSE ARCHITEKTUR UNTER VERWENDUNG EINES KOMMUNIKATIONSKANALS AUF CLOUD-SPEICHERDIENSTBASIS
APPRENTISSAGE DE GRANDS MODÈLES DL PAR L'INTERMÉDIAIRE D'UNE ARCHITECTURE SANS SERVEUR À L'AIDE D'UN CANAL DE COMMUNICATION BASÉ SUR DES SERVICES DE STOCKAGE EN NUAGE

(30) Priority: 15.06.2022 IN 202221034375
(43) Date of publication of application: 20.12.2023
(73) Proprietor: Tata Consultancy Services Limited, Maharashtra (IN)
(72) Inventor: CHAHAL, DHEERAJ, 411028 Pune, Maharashtra (IN); PALEPU, SURYA Chaitanya VENKATA, 560066 Bangalore, Karnataka (IN); MISHRA, MAYANK, 400607 Thane West, Maharashtra (IN); SINGH, RAVI KUMAR, 411057 Pune, Maharashtra (IN); SINGHAL, REKHA, 400607 Thane West, Maharashtra (IN)
(74) Representative: Goddar, Heinz J.

(56) References cited:
- JIANG JIAWEI JIAWEI JIANG@INF ETHZ CH ET AL: "Towards Demystifying Serverless Machine Learning Training", PROCEEDINGS OF THE GENETIC AND EVOLUTIONARY COMPUTATION CONFERENCE, ACMPUB27, NEW YORK, NY, USA, 9 June 2021 (2021-06-09), pages 857 - 871, XP058757346, ISBN: 978-1-4503-8357-8, DOI: 10.1145/3448016.3459240

## Description

### CROSS-REFERENCE TO RELATED APPLICATIONS AND PRIORITY

The present application claims priority to Indian application no. 202221034375, filed on June 15, 2022.

### TECHNICAL FIELD

The embodiments herein generally relate to the field of serverless architecture and, more particularly, to a method and system for training large Deep Learning (DL) models via serverless architecture using cloud storage services-based communication channel.

### BACKGROUND

Serverless architecture is emerging as a platform of choice for deploying event-based applications primarily due to the ease of resource management, high scalability and cost effective deployment. Serverless architecture platforms such as Amazon Web Services (AWS) Lambda^{™}, Azure functions^{™}, Google function^{™}, etc., have recently gained a foothold in the machine learning domain. The use of serverless platforms for deep learning inference is well known. However, training Deep Learning (DL) models using serverless platforms is still challenging due to certain inherent constraints. Serverless instances have limited compute power and a short lifetime hence may not suit large deep learning models' compute intensive and long-running training. For example, AWS serverless platform Lambda^{™} has a maximum of 15 minutes of instance uptime. Google functions^{™} live for 9 minutes. Azure^{™} allows a maximum run time between 5 and 30 minutes based on the chosen plan. The number of cores made available per instance is limited as well, e.g., 6 cores, 4 cores, and 2 cores for Lambda^{™}, Azure^{™}, and Google functions^{™} respectively. Moreover, serverless instances are stateless and lack the ability of peer-to-peer communication, restricting their use for distributed training which requires a frequent exchange of data between peers.

Despite all these challenges, serverless platforms are being explored for their applicability in various application domains including machine learning. This is primarily due to the many features offered by these platforms, such as a high scalability, ease of resource management, and a cost-effective pay-by-use cost model. Some architectures and techniques have been proposed to overcome serverless platform challenges for distributed machine learning using serverless platforms. These architectures harness compute power from serverless instance swarms and achieve persistent storage using communication channels provided as a service by cloud vendors. Additionally, there have been advancements in certain features in serverless platforms provided by cloud vendors, such as more memory and compute power per instance as well as compatibility with a larger number of cloud services. This has led to the possibility of using them as a platform for training deep learning models. Very recently, the use of serverless instances for distributed training on cloud using Virtual Machine (VM) based parameter servers and communication channels such as object storage services, caching systems, and databases has been presented. These works list advantages and limitations of serverless architecture for training models using a distributed environment and cloud services.

Efforts have been made from academia and industry to study the use of serverless platform for ML training. However, limited work is available on the performance and cost involved when serverless platforms are used with various storage services. The training of large models using serverless platform with stateful databases has also not been explored so far. One of the advantages of using databases as a communication channel is the ability to perform analytics on the data using a structured query. For example, weights and parameters of each layer in each mini-batch of the training process are stored in the database, which can be subsequently analyzed for model architecture and accuracy improvement. Additionally, model training with cloud serverless platforms and database services can be cost-effective due to per request billing resulting in a "pay-as-you-train" cost model.

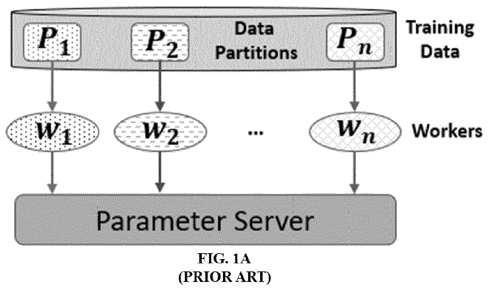

One widespread implementation for ML distributed training involves the use of parameter servers using Infrastructure-as-a-Service (IaaS) on cloud as depicted in FIG. 1A. This approach involves using multiple bare-metal, virtual machines, or Function-as-a-Service (FaaS) instances as distributed workers and one of the machines called parameter server, aggregating the updates from the workers, and redistributing. The performance of FaaS vis-a-vis IaaS has been studied in detail in many works.

In a very recent work by Jian et al., a platform called LambdaML framework is proposed to study the performance and relative advantages of serverless architectures vis-a-vis serverful infrastructures for distributed training of ML models. The LambdaML framework overcomes some of the challenges of earlier works, such as slow communication between FaaS and the VM running parameter server. However, the architecture of LambdaML is limited by the maximum size of the gradients or local models and the model allowed in the cloud storage services.
Document JIANG JIAWE] JIAWEI JIANG@INF ETHZ CH ET AL: "Towards Demystifying Serverless Machine Learning Training", discloses The appeal of serverless (IaaS) has triggered a growing interest on how to use it in data-intensive applications such as ETL, query processing, or machine learning (ML). Several systems exist for training large-scale ML models on top of serverless infrastructures (e.g., AWS Lambda) but with inconclusive results in terms of their performance and relative advantage over "serverful" infrastructures (IaaS). In this paper we present a systematic, comparative study of distributed ML training over FaaS and IaaS. We present a design space covering design choices such as optimization algorithms and synchronization protocols, and implement a platform, LambdaML, that enables a fair comparison between FaaS and IaaS. We present experimental results using LambdaML and further develop an analytic model to capture cost/performance tradeoffs that must be considered when opting for a serverless infrastructure. Our results indicate that ML training pays off in serverless only for models with efficient (i.e., reduced) communication and that quickly converge. In general, FaaS can be much faster but it is never significantly cheaper than IaaS.

### SUMMARY

Embodiments of the present disclosure present technological improvements as solutions to one or more of the above-mentioned technical problems recognized by the inventors in conventional systems.

The invention is set out in the appended claims. Dependent claims set out particular embodiments.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A and 1B are block diagrams of prior art frameworks for distributing computing using parameter server and abstract representation of LambdaML framework for distributed training of Deep Learning (DL) model in a serverless architecture, respectively.
FIG. 2A and 2B is a functional block diagram and an architectural block diagram respectively of a system for training large Deep Learning (DL) models via the serverless architecture using a cloud storage services-based communication channel, in accordance with some embodiments of the present disclosure.
FIGS. 3A through 3B (collectively referred as FIG. 3) is a flow diagram illustrating a method for training large DL models via serverless architecture using a cloud storage services-based communication channel, using the system of FIG. 2A, in accordance with some embodiments of the present disclosure.
FIG. 4 illustrates a schematic view of characteristics of the cloud storage services-based communication channels depicting maximum allowed size of a single data item by S3, Memcached, DynamoDB, in accordance with some embodiments of the present disclosure.
FIGS. 5A through 5C illustrate comparative results of execution time for completing specified number of mini-batches of training for multiple DL models with increasing number of workers spawned in the serverless architecture across multiple communication channels, in accordance with some embodiments of the present disclosure.
FIGS. 6A through 6C illustrate comparative results of effect of multi-threading on communication overhead during of training for multiple DL models with increasing number of workers spawned in the serverless architecture across multiple communication channels, in accordance with some embodiments of the present disclosure.
FIGS. 7A through 7C illustrate comparative results of communication overhead during of training for multiple DL models with increasing number of workers spawned in the serverless architecture across multiple communication channels, in accordance with some embodiments of the present disclosure.
FIGS. 8A through 8C illustrate evaluation of an analytical model across multiple DL models being trained, in accordance with some embodiments of the present disclosure.
FIGS. 9A and 9B illustrate computed cost of training of multiple DL models across multiple communication channels using the analytical model, in accordance with some embodiments of the present disclosure.
FIGS. 10A and 10B illustrate effect of gradient data type on execution time computed using the analytical model, in accordance with some embodiments of the present disclosure.
FIGS. 11A and 11B illustrate effect of gradient data type on execution time computed using the analytical model, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the appended claims.

Like any other distributed training environment, serverless platform-based training is also based on four essential elements: (1) Distributed optimization algorithm, (2) Communication channel or shared storage, (3) Communication pattern, and (4) Synchronization protocol. The distributed model training in the serverless platform is accomplished as follows:
Step 1: Spawn multiple serverless instances (known as workers) and distribute training data amongst them by downloading it from the storage device.
Step 2: Train the model at each instance using the corresponding training data.
Step 3: On completion of each mini-batch of training data, send gradients or local models from all the workers to the communication channel.
Step 4: Aggregate the data collected from all the workers and send back the aggregated gradients or model to all the workers, then continue with the next mini-batch of the training data.

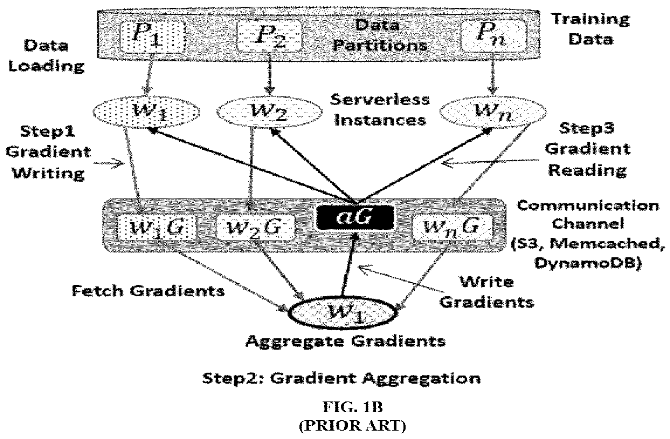

The existing LambdaML framework implementing the steps 1-4 for distributed training of DL models is depicted in FIG. 1B. However, the LambdaML of FIG. 1B trains ML/DL models using storage services S3, small and tiny models using Memcached, and DynamoDB, respectively. The LambdaML uses S3 to store partitioned training data. The framework implements two optimization algorithms: distributed stochastic gradient descent (DSGD) and distributed alternating direction method of multipliers (ADMM). The DSGD is implemented using gradient average (GA) and model averaging (MA) methods. Also, LambdaML implements two MPI based communication patterns called AllReduce and ScatterReduce. In an AllReduce implementation, each worker instance writes gradients to the storage. The master instance reads the updates from all the workers and aggregates them. The aggregated updates are written back in the storage device. Each of the workers now read the aggregated gradients and update their model. In a ScatterReduce implementation, each worker divides the update into partitions equal to the number of workers. Each worker saves the partitions separately to the storage device. The master aggregator now pulls the respective partitions from all the workers and aggregates them before saving them back to the storage device. Next, the aggregated updates are consumed by each of the workers. One of the critical features in the framework is the capability of handling long-running training jobs. AWS Lambda functions have a lifetime of 15 minutes. All the workers in the framework keep track of the execution and save the model's state as the timeout approaches. A new set of Lambda instances are spawned to restart the training process using the same partitioned data, corresponding checkpoint, and the saved model state.

Currently, LambdaML is the first and only framework to implement serverless platform based distributed training using key-value store database as a communication channel. However, one of major technical limitations of the LambdaML framework is its inability to train large deep learning (DL) models using database services on cloud as a communication channel. The reason being that the framework assumes the size of local models trained or gradients generated during each training instances by each worker to be smaller than the size of one data item or row allowed in the database used as a communication channel. This is depicted in table I.

**TABLE I**

| THE SIZE OF MODELS IMPLEMENTED IN LAMBAML USING VARIOUS COMMUNICATION CHANNELS WITH SERVERLESS PLATFORM LAMBDA | | |
|---|---|---|
| Storage | Storage type | Model Size |
| S3 | Object store | Any (large and small) |
| Memcached | Key-value in-memory | Less than 130MB (small) |
| DynamoDB | Key-value NoSQL database | Less than 400KB (very small) |

This assumption is a technical limitation of the LamdaML framework for training DL models where the model or their gradient size (local models) is more than the maximum allowed data item size in the data storage system. Thus, training of large DL models using distributed training on serverless platform is unaddressed domain.

Embodiments of the present disclosure provide a technical solution to the above technical problem by disclosing a method and system for training large Deep Learning (DL) models via serverless architecture using a cloud storage services-based communication channel when the gradients of the DL model to be trained are larger than maximum allowed size of one or single data item in the cloud storage services-based communication channel, interchangeably referred hereinafter as communication channel or data storage. Thus, the term 'large' herein is to be interpreted in context of size of gradients in comparison to maximum allowed size of one (single) data item allowed by the communication channel. The gradients, also referred to as local DL models, generated by each worker, similar to the LamdaML framework during a current training instance are thus chunked into a plurality of segments and are stored in the communication channel, such as a DynamoDB, S3, Memcached or the like. Corresponding segments of each worker are aggregated by one or more aggregators and stored back to the data storage. The manner in which the segments are stored can be modified in accordance with the maximum size of one data item allowed of the communication channel. Thereafter, each of the aggregated corresponding segments are read by each worker to generate an aggregated model to be used during successive training instance. The method disclosed herein, provides optimization techniques such as multi-threading, multiple aggregators, data types etc. with the cloud storage services-based communication channels resulting in a significant improvement in the performance and the cost of training.

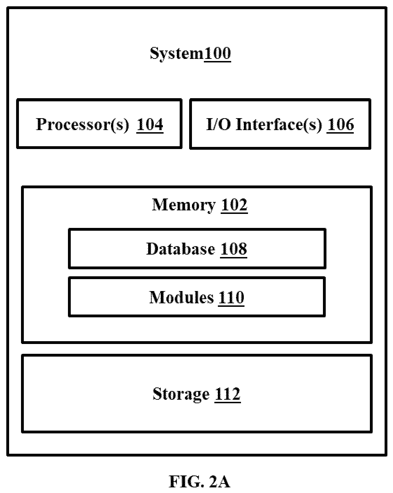

Referring now to the drawings, and more particularly to FIGS. 2A through 11B, where similar reference characters denote corresponding features consistently throughout the figures, there are shown preferred embodiments and these embodiments are described in the context of the following exemplary system and/or method.

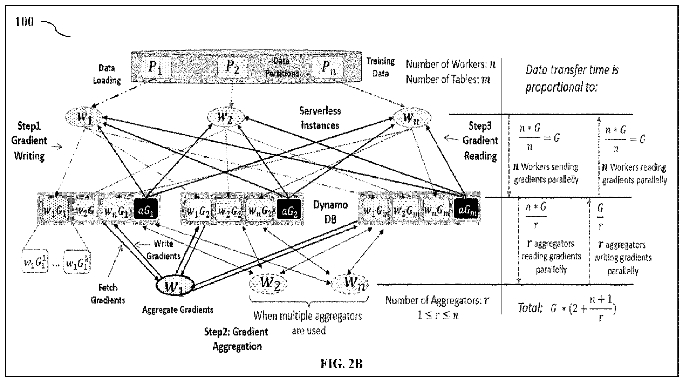

FIG. 2A and 2B is a functional block diagram and an architectural block diagram respectively of a system 100 for training large Deep Learning (DL) models via the serverless architecture using a cloud storage services-based communication channel. The system 100 is a distributed environment system. The system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, the processor(s) 104, is one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including virtual machines, fog devices, edge devises comprising laptop computers, notebooks, hand-held devices such as mobile phones, workstations, mainframe computers, servers, and the like.

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110. The plurality of modules 110 include programs or coded instructions that supplement applications or functions performed by the system 100 for executing different steps involved in the process of training large Deep Learning (DL) models via the serverless architecture using the cloud storage services-based communication channel. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

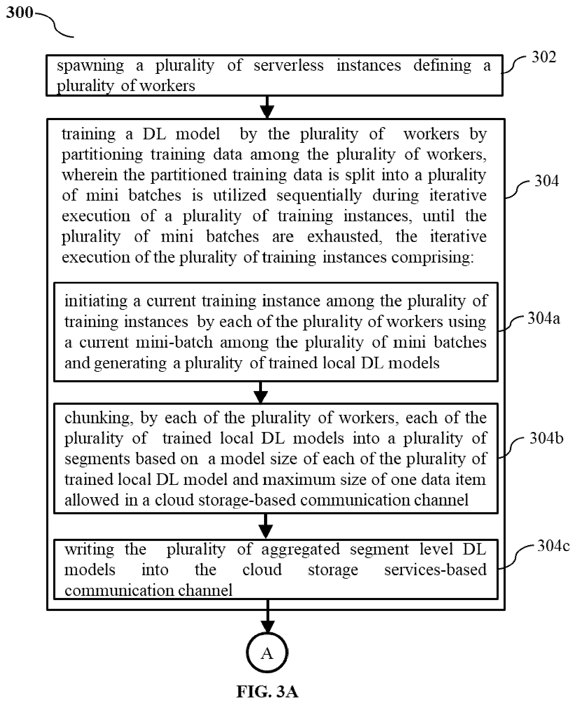

Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted piece of code for refinement and data that is processed, received, or generated as a result of the execution of the plurality of modules in the module(s) 110. Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). The system 100 further includes a storage 112 comprising at least one of an object storage such as S3, database storage DynamoDB, a cache storage such as Memcached, or the like that function as the cloud storage-based communication channel. Functions of the components of the system 100 are now explained with reference to steps in flow diagrams in FIG. 3A through FIG. 11B.

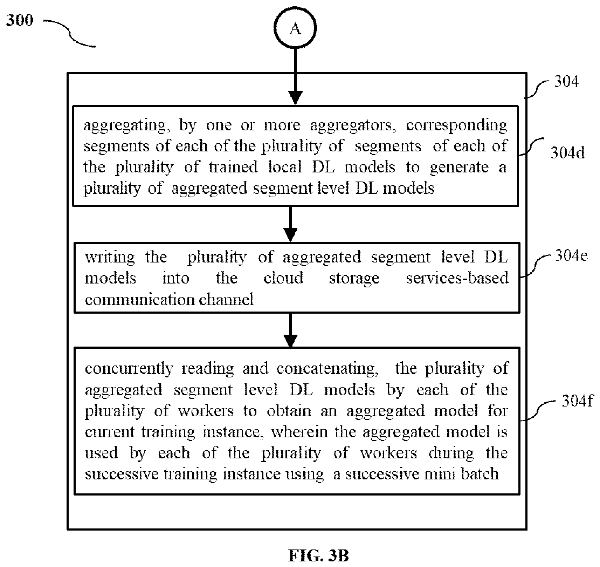

FIGS. 3A through 3B (collectively referred as FIG. 3) is a flow diagram illustrating a method 300 for training large DL models via serverless architecture using the cloud storage services-based communication channel, using the system of FIG. 1, in accordance with some embodiments of the present disclosure.

The system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG. 2A and 2B and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Some of the advantages of the database as a communication channel includes its high availability, performance, data security, optimal cost on a serverless database, and integration with cloud services such as serverless platforms. Additionally, database services have tools for performing analytics, extracting insights and monitoring workload. It can be noted that steps of the method 300 are explained with a key-value store database as an example of cloud storage services-based communication channel and it can be equally implemented on any other communication channel in accordance with the maximum size of one data item of respective communication channel.

The maximum item size that can be stored in the key-value database table's row is relatively smaller than object storage and object caching systems (e.g., 400KB in AWS DynamoDB and 2MB in Azure Cosmos database). The gradient or model updated from a worker can be saved in one cell or row if the size is smaller than the maximum allowed size. However, saving model updates or gradients larger than the maximum limit requires multiple cells. Hence the approach used for communication channels such as parameter server, caching systems (130MB in AWS Memcached) and object storage (5TB in AWS S3) is not applicable, especially for key-value data stores.

Referring to the steps of the method 300, at step 302 of the method 300, the one or more hardware processors 104 spawn a plurality of serverless instances defining a plurality of workers. At step 304 of the method 300, the one or more hardware processors 104 train a DL model by the plurality of workers by partitioning the training data among the plurality of workers. The partitioned training data is split into a plurality of mini batches and is utilized sequentially during iterative execution of a plurality of training instances, until the plurality of mini batches are exhausted.

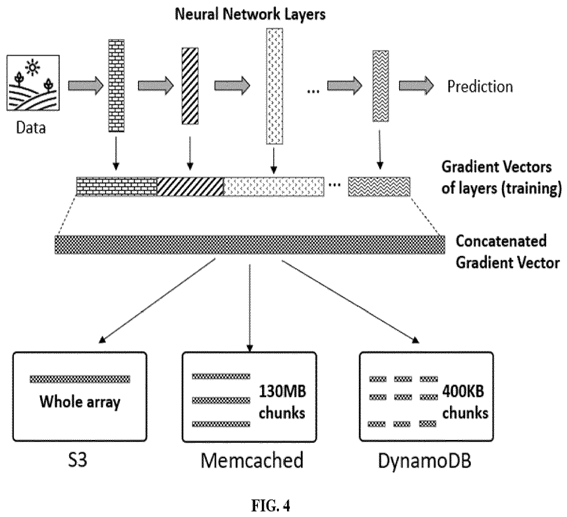

The iterative execution of the plurality of training instances comprises of following steps:
a) Step 304a- Initiate a current training instance among the plurality of training instances by each of the plurality of workers using a current mini-batch among the plurality of mini batches. Thus, at the end of each mini batch a plurality of trained local DL models, also referred as gradient are generated.
b) Step 304b- It can be understood that while building large DL models trained over huge volume of data, even each local DL model or the gradient generated may be of size higher that the maximum size of one data item of the communication channel used for aggregating the layered training of the DL model. Thus, the each of the plurality of workers are configured to chunk, each of the plurality of trained local DL models into a plurality of segments based on a model size of each of the plurality of trained local DL model and maximum size of one data item of the cloud storage services-based communication channel. For example, Dynamo-DB allows maximum size of 400KB chunks, S3 allows whole array, while Memcached allows 130MB chunks. The gradient is divided into multiple segments such that the size of each segment is smaller than the maximum data item size allowed (refer to FIG. 4). For example, suppose size of the local DL model, also interchangeably referred as gradient or gradient vector, generated by the worker is G and the max data item size for one row in the database allowed is I in accordance with the data storage specification of the communication channel, then the number of gradient vector segments generated is: ${N}_{seg} = \left[\frac{G}{I}\right]$ (1) The method disclosed not only enables chunking of the local DL model or the gradients but also provides a technique to optimize the size of segment during chunking. As depicted in FIG. 4, chunking is based the communication channel (cloud service) used, total size of the gradient vector, configuration of the lambda functions. The schema for storing gradient is dependent on the communication channel. For example, when using DynamoDB as a communication channel, the optimal chunk size is derived by fine tuning the number of tables to use for storing tables, number of db workers, number of Lambda instances etc. An algorithm1 defining the size of segment for DynamoDB this is given below:

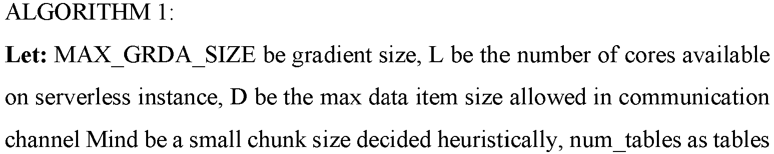

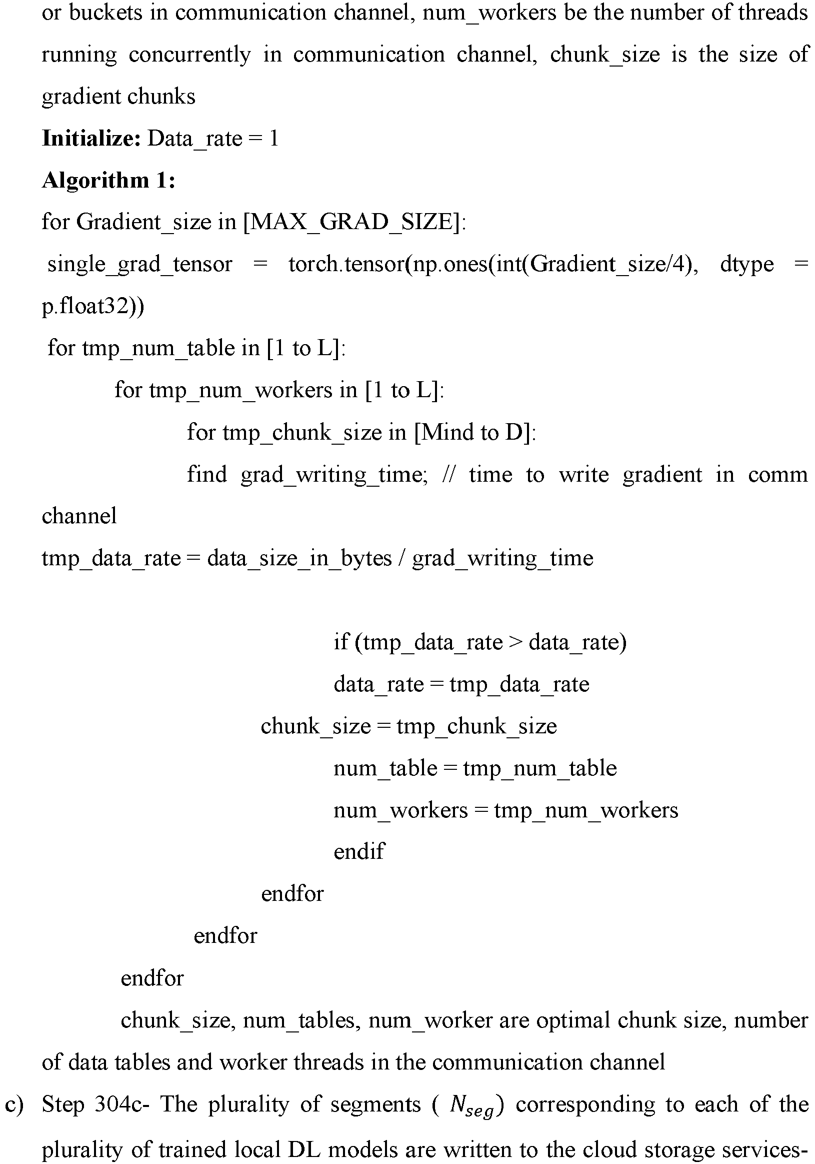

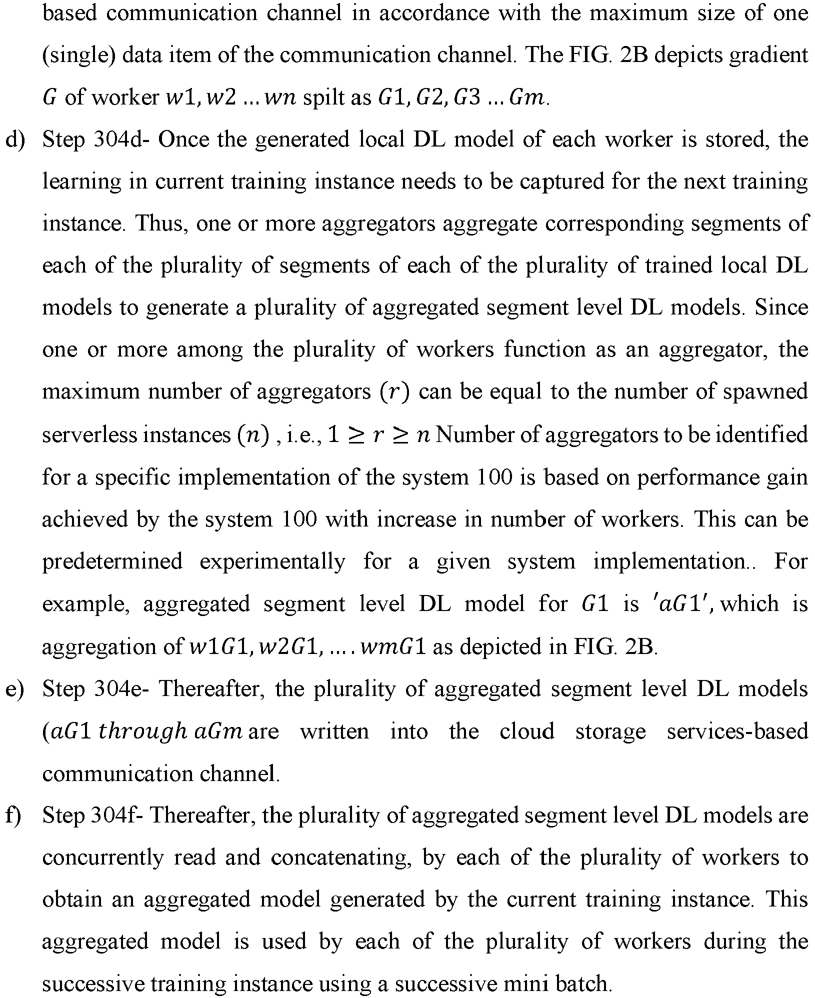

Technical challenge in utilizing the cloud storage services-based communication channel for distributed training is the communication overhead. In addition, when the generated large gradients are further split into segments, this adds on to the communication overhead for reading and writing the data of the generated gradients and aggregating them. To address the technical challenge the method disclosed herein accelerates the communication using one or more optimization techniques mentioned below:
a) Utilizing a plurality of tables for storing the plurality of segments of each of the plurality of local models, when the cloud storage based communication channel is a database storage.
b) Utilizing the plurality of aggregators that read and write to the cloud storage services-based communication channel concurrently, reducing communication overhead.
c) Writing the plurality of segments corresponding to each of the plurality of trained local DL models to the cloud services based communication channel by creating batches of the plurality of segments and using multiple threads within each worker transfers the batches in parallel to the cloud storage services-based communication channel, and wherein multiple threads can leverage multiple cores available on each of the plurality of serverless instances.
d) Reducing a number of the plurality of segments created for each of the plurality of trained local DL models by converting data elements of each of the plurality of trained local models to float16 and int8 based on the DL model and value of range of the trained local DL model.

Referring back to the architecture of the system 100 in FIG. 2B, the FIG. 2B is a schematic representation of algorithm 2 below explaining training of the large DL model disclosed by the method 300 using the key value data store with only one aggregator.

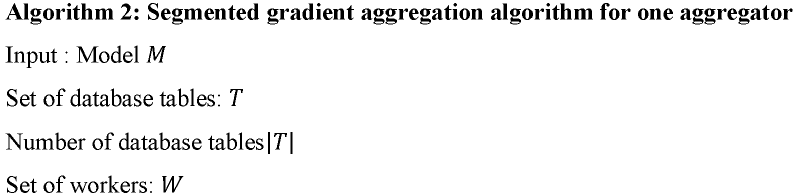

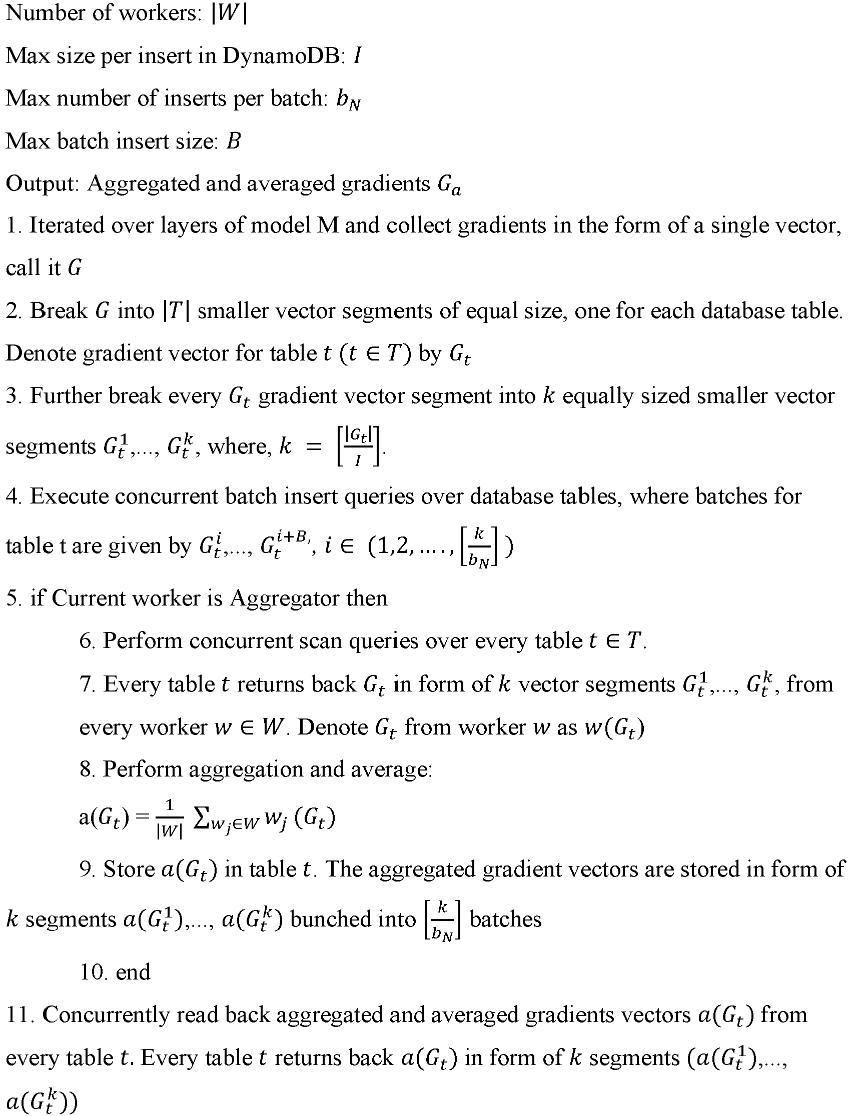

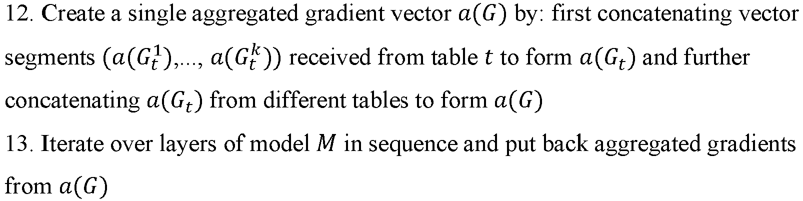

The algorithm 2 consists of three steps: gradient (local DL model) save (lines 1 to 4 of algorithm), gradient aggregation (lines 5 to 10 of algorithm), and gradient update (lines 11 to 13 of algorithm). As depicted in FIG. 2B, each worker trains the model on its allocated data partitions (mini batches) and transfers the gradient vector in multiple segments to tables in the database (shown as step1). Once the gradients are received from all the workers, the master worker pulls the gradient segments from all the tables, aggregates them, and saves them back in the tables (shown as step 2). Further, each worker pulls the aggregated gradients (shown as step 3) and continues with the next mini-batch. One implication of this approach is an increase in the number of communications from a worker and aggregator by a factor of 2*N_{seg},* where *N_{seg}* denotes the number of gradient vector segments as shown in equation 1. In order to accelerate the communication between workers and the database, optimization solutions for the key value data store are as discussed below.

**Multiple tables for storing gradient vector segments:** Multiple tables in the database so that these workers can simultaneously access these tables and save updates in parallel. The number of tables used in the database equals the number of workers. Each worker first divides the gradient vector into segments (one per table) and writes these gradient vector segments in the tables concurrently. While reading updates, the lead aggregator worker reads the corresponding gradient segments from each table. The aggregation and averaging of gradient vectors are performed over the gradient vector segments. The aggregated and averaged gradient vector segments are written back in batches to all the tables concurrently. Thus, each table contains a part of the overall aggregated and averaged gradient vector. All workers can read the aggregated gradient vector segments from the tables concurrently and concatenate the segments to form a single aggregated gradient vector.
a) **Multiple Aggregators:** Multiple aggregators are used that read and save back aggregated gradient segments in the table concurrently unlike only one aggregator used in existing LamdaML framework. This reduces the communication overhead due to the parallel read and write of the gradient segments by the aggregators.
b) **Multiple threads for saving gradients:** Batches of gradient vector segments are created and multiple threads within each worker are used to transfer these batches in parallel to the database. The multiple worker threads can leverage multiple cores available on each serverless instance.
c) **Sending gradients in batches:** In order to reduce the read and writes to the database from each worker, multiple read and write requests are combined. Each worker sends write requests to save the batches of gradient vector segments and later reads them from tables. This results in a significant reduction in the communication overhead and cost.
d) **Data type**: As discussed earlier, the biggest bottleneck in the approach in data storage based communication channel is the communication overhead. The amount of data transferred (gradient vector) affects the communication overhead. The default datatype in PyTorch is float32. However, the data elements of the gradients are converted to float16 and int8 based on models and their gradient value range. The conversion of data type to float16 or int8 reduces the number of segments created for gradient vector. This proportionally affects the number of requests sent to the database from the workers resulting in a significant reduction in the communication overhead. In the experimental evaluation mentioned later reduction of 3.1x, 2*x*, 5.2*x* in execution time with different data storages such as Memcached, S3, and DynamoDB respectively is observed. One of the biggest concerns in this approach is the loss of information and the model's accuracy. However, this approach is applicable in all the scenarios where the range of gradient values can fit in float16 and int8 data types without curtailing the information bits.

**TABLE II**

| AVERAGE VALUE OF CONSTANTS USED IN THE ANALYTICAL MODEL | | |
|---|---|---|
| Symbol | Meaning | Average value |
| T(w) | Function Cold start | appx. 2s |
| *Bₛ₃* | S3 bandwidth | 65MB/s |
| *B_{M}* | Memcached bandwidth | 650MB/s |
| *B_{D}* | DynamoDB bandwidth | 70MB/s |

ANALYTICAL MODEL: In order to estimate the performance and cost of training in deep learning models using a serverless platform with multiple communication channels, the method disclosed provides an analytical model. Using the analytical model, the time and hence the cost to complete n mini-batches or epochs is estimated. Let the algorithm 1 require *E* epochs to reach convergence using one worker, where each epoch involves training over *N_{B}* mini-batches. Assuming that *S*(*ω*) denotes the scaling factor, such that spawning w workers will result in more epochs to reach convergence. The total execution time of the FaaS for w workers can be calculated as follows: ${F}_{t} \left({N}_{B}; n\right) = {T}_{CS} + {T}_{dl} + {T}_{Mcomp} + {T}_{CO} \times \left({T}_{SO}\times {T}_{C}\right) + {T}_{Acomp}$ (2) where, individual terms are described in table II and III. ${T}_{dl} = \frac{S}{{B}_{S 3}}$ (3) ${T}_{CO} = S \left(n\right)$ (4) ${T}_{SO} = Sync \left(n\right)$ (5) ${T}_{C} = E \times \frac{{N}_{B}}{n} \times G \times \left(\frac{2 + \frac{n + 1}{r}}{{B}_{{S}_{3} \left|M\right| D}}+{L}_{{S}_{3} \left|M\right| D}\right)$ (6) ${T}_{Acomp} = E \times \frac{{N}_{B}}{n} \times Compute \left(n, G\right)$ (7)

**TABLE III**

| SYMBOLS USED IN THE ANALYTICAL MODEL | |
|---|---|
| *T_{cs}* | Cold start time |
| *T_{dl}* | Data loading time |
| *T_{c}* | Communication time |
| *T_{SO}* | Synchronization overhead |
| *T_{Acomp}* | Gradient aggregation compute time |
| *T_{Mcomp}* | Model compute time |
| *S* | Training Data Size |
| *T_{CO}*; *S*(*n*) | Communication Overhead factor (due to w workers) |
| *E* | Number of Epochs (non-distributed training) |
| *N_{B}* | Total number of mini-batches |
| *n* | Number of workers |
| *r* | Number of aggregators |
| *Sync(n)* | Synchronization overhead |
| *G* | Memory size of Gradients |
| *L_{S3}*\|*M*\|*D* | Latency of per unit data insert (read) to (from) communication channels |

Here $\frac{{N}_{B}}{n}$ represents the number of gradient aggregation rounds required for one epoch. Each aggregation round results in $2 + \frac{n + 1}{r}$ communications with communication channel (FIG. 2B) due to a) the gradient upload by n workers on the communication channels; b) gradient downloads for the aggregation by *r* aggregators; c) uploading the aggregated gradients by *r* aggregators on the communication channel and d) downloading the aggregated gradients by *n* workers. Equation 6 holds true when the whole gradient vector fits in a single data item in the key-value store database. However, larger deep learning models require multiple data items to be employed. In such cases, utilization of the available bandwidth (*B_{D}*) depends on the message size, batch size, concurrency, and the number of tables employed for the gradient storage. Hence Tc becomes: ${T}_{C} = \frac{{N}_{B}}{n} \times G \times \left(\frac{2 + \frac{n + 1}{r}}{{F}_{S} \times {N}_{db} \times {BT}_{S}}+{L}_{{S}_{3} \left|M\right| D}\right)$ (8) Where, *Fₛ* is the size of each segment of gradients, *N_{db}* is the number of concurrent read and write threads, and *BTₛ* is the maximum allowed batch size.

**Effect of communication overhead in large models:** With an increase in the size of the model and hence it is gradient vector *G*, the term *N_{seg},* which denotes number of gradient vector segments to be stored (Equation 1) increases proportionally. This results in an additional communication overhead, particularly in DynamoDB where the maximum data item size allowed is much smaller than S3 or Memcached.

Predicting the total cost of training a model requires knowledge of the number of epochs completed for convergence. Estimating the number of epochs has been the focus of many prior works. As discussed earlier, the objective of the method disclosed is to show the feasibility of distributed serverless computing using a key-value database as a communication channel and compare its performance with object storage (S3) and Memcached. Nonetheless, the proposed model can be used with other works to estimate the performance and cost for convergence.

**TABLE IV**

| THREE USECASES EVALUATED IN OUR STUDY | | | |
|---|---|---|---|
| Use case | Model Size (MB) | Model Type | Data set |
| MobileNet | 12 | Image classification | Cifar10 |
| NISER | 17 | Recommender system | Diginetica |
| BCD4REC | 24 | Recommender system | Diginetica |

EXPERIMENTAL SETUP: Implementation of the system 100 is evaluated using three different types of deep neural networks as discussed below in table IV. Batch-Constrained Distributional Reinforcement learning for Session-based Recommendations (BCD4REC) is in house tool. It trains an offline RL agent to learn a policy that can recommend a set of products based on the available products previously not clicked by the user. A public dataset, Diginetica, is used for BC4REC training consists of 321K training sessions and 65K products. NISER: Another in-house tool. Normalized Item and Session Representations (NISER) is a session based recommender system that employs a Graph Neural Network algorithm. NISER deep learning model is trained on the Diginetica dataset consisting of around 720K training sessions and 43K unique product items. MobileNet (MN) is a popular deep neural network based on depth-wise separable communication. MN is trained on the Cifar10 dataset. The size of the gradients is 12MB and the size of each input image is 32 × 32. The objective of the experiments on the system 100 is not to study the model convergence and accuracy using serverless platforms, it has been studied extensively. The experiments are performed to study system efficiency by measuring the execution time for a fixed number of mini-batches or epochs, which is sufficient to compare the performance and cost of communication channels (80 mini-batches in our workloads), including key-value store. The training data for each experiment are randomly shuffled and split into a training set (80%) and a validation set (20%). The learning rate varies between0.001 to 0.01 based on the optimal value for each model. The Lambda memory is configured with 10GB resulting in the allocation of maximal 6 cores for each of the instances. A DSGD optimization algorithm is used with gradient aggregation in all experiments.

EXPERIMENTS: In this section the evaluation of our distributed training approach for larger deep learning models using the system and method disclosed herein is discussed. Experiments are focused on comparing the performance (execution time) and the cost of data storage (DynamoDB, Memcached, S3) of cloud services for models of varying sizes. Primarily the gradient segmentation approach is evaluated on DynamoDB and optimization techniques on DynamoDB, Memcached and S3.

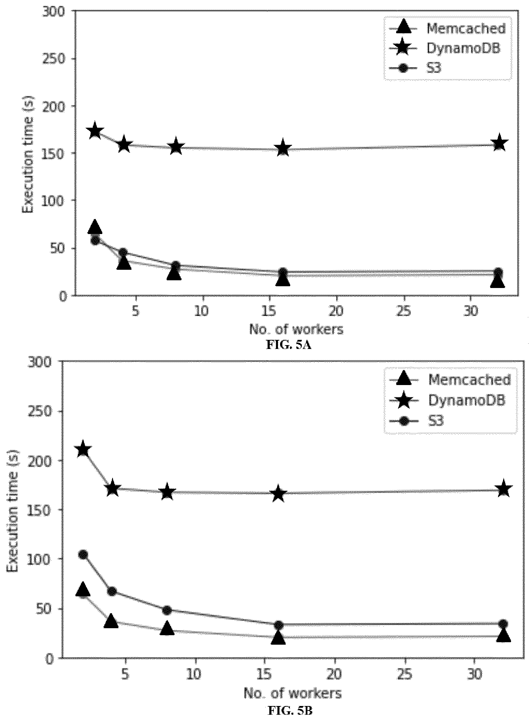

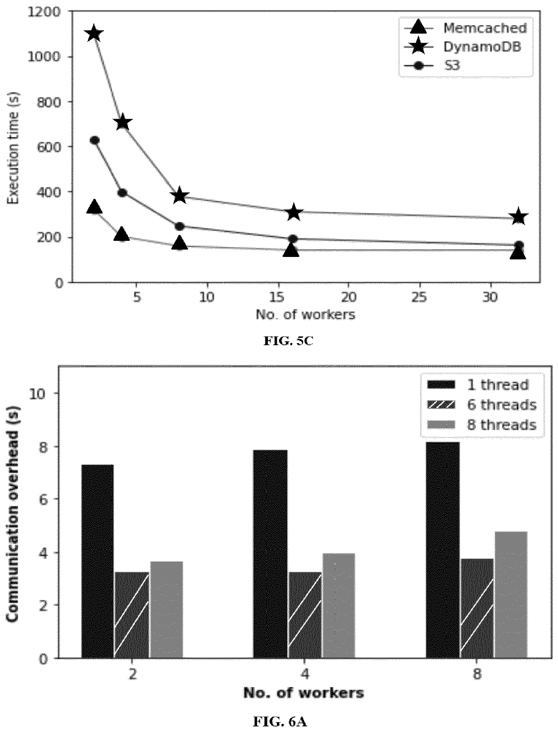

**Execution time:** In this experiment, the time taken to complete one epoch is compared by varying no. of workers on Lambda instances when S3, Memcached, and DynamoDB are used as communication channels for workloads such as BCD4REC NISER . From FIGS. 5A, 5B and 5C it can be concluded that (a) DynamoDB is the slowest among three communication channels and (b) the time to complete one epoch reduces with an increase in the number of workers up to 16. This is because the training data gets distributed equally amongst the workers. However, beyond 16 workers in each of the workloads, no significant gain in the execution time is observed because the communication overhead exceeds the gain due to workload division.

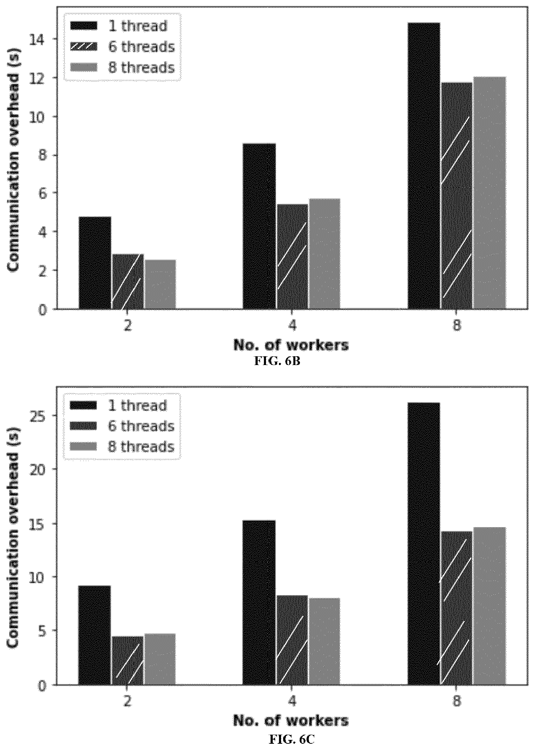

**Optimization with parallel threads:** A few optimizations are applied to reduce the communication overhead and cost of implementation. As discussed in earlier, multiple threads are used in each Lambda instance to store the segmented gradients in the DB tables. The effect of the number of threads with the increasing number of Lambda instances on the communication time is as shown in FIGS 6A, 6B and 6C. The communication overhead reduces significantly when multiple th'reads store segmented gradients in DynamoDB tables. The optimal number is achieved with 6 threads running of (a) NISER (b) BCD4REC in parallel on each instance with 6 cores (maximum available cores on Lambda).

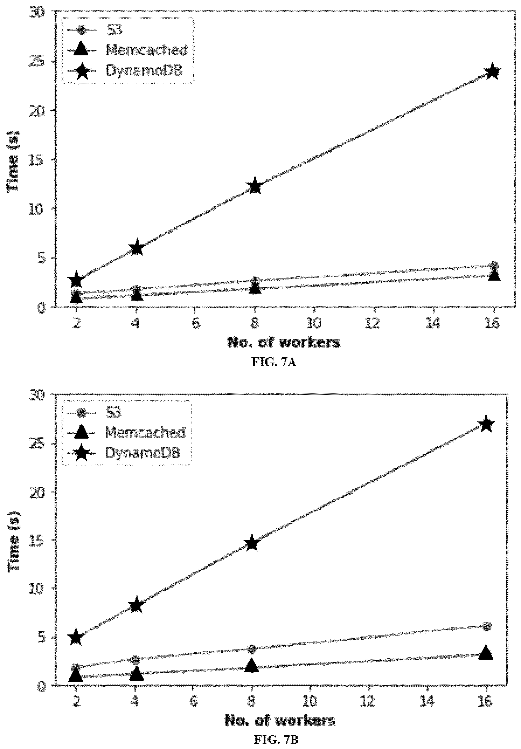

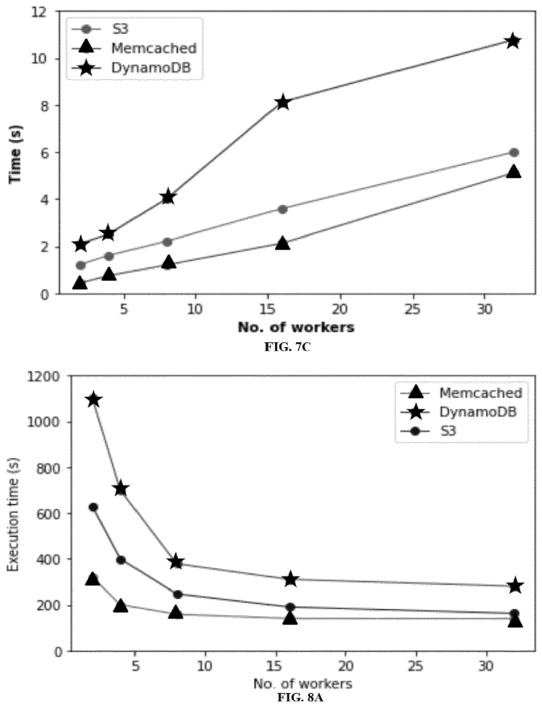

**Communication overhead:** The communication overhead observed with the three communication channels, i.e., S3, Memcached, and our implementation with DynamoDB is compared. The communication overhead due to one update includes communication channel, (b) read by the master aggregator once the gradients are received from all the workers, (c) save merged gradients to the channel, and (d) send merged gradients to all the workers. FIGS. 7A, 7B and 7C shows the communication overhead for one update. DynamoDB results in the highest latency, followed by S3 and Memcached. The latency increases as the number of workers increase. For a given number of workers with any communication channel, larger models show higher latency. The Memcached are in-memory stores and hence the fastest among all three communication channels. Although the communication overhead increases but total execution time decrease with increasing number of workers as shown in FIGS 5A, 5B and 5C.

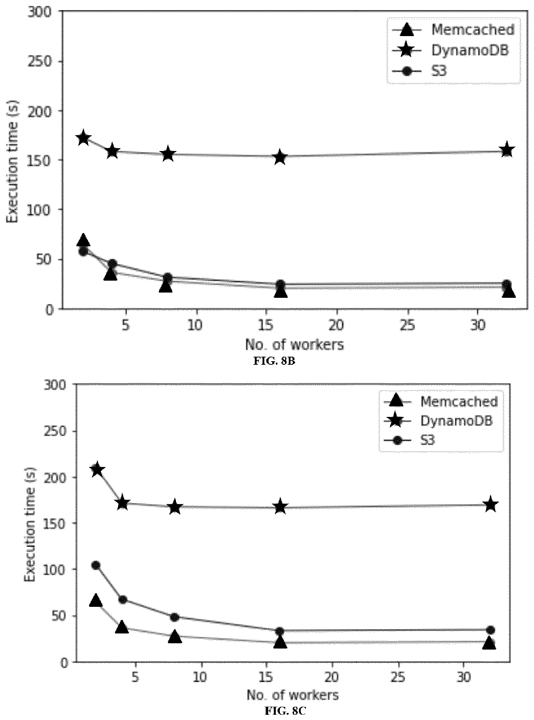

Comparison of analytical and empirical data: FIGS. 8A, 8B and 8C shows the comparison of the execution time calculated using the analytical model and experimental data for one epoch with a varying number of workers. The total execution time predicted by the analytical model using the constants given in the table II approximates the experimental data well.

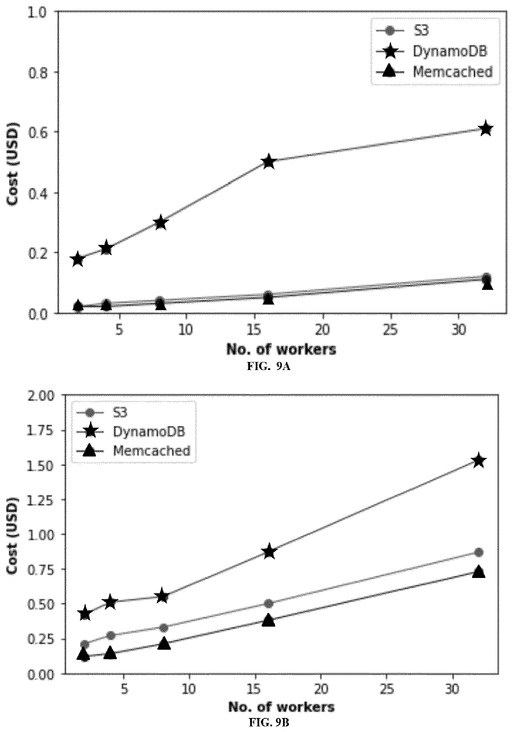

**Cost:** Each communication channel used in the evaluation has a unique cost model. The total cost of implementation depends on the number of reads and writes, size of the data transferred, number of Lambda instances used and their configuration such as memory size, and the fixed cost of the communication channel. As shown in FIGS. 9A and 9B, Memcached cost the least. As observed in experiments discussed above, Memcached appears to outperform S3 and DynamoDB. However, the overall cost of Memcached is larger than S3 and comparable to DynamoDB because it takes more than 2 minutes to start the Memcached cluster whereas S3 and DynamoDB (pay-per-use) are instant.

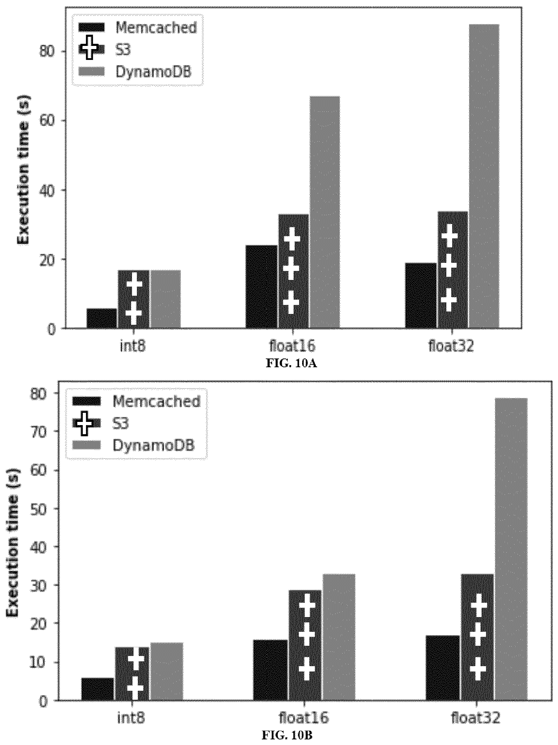

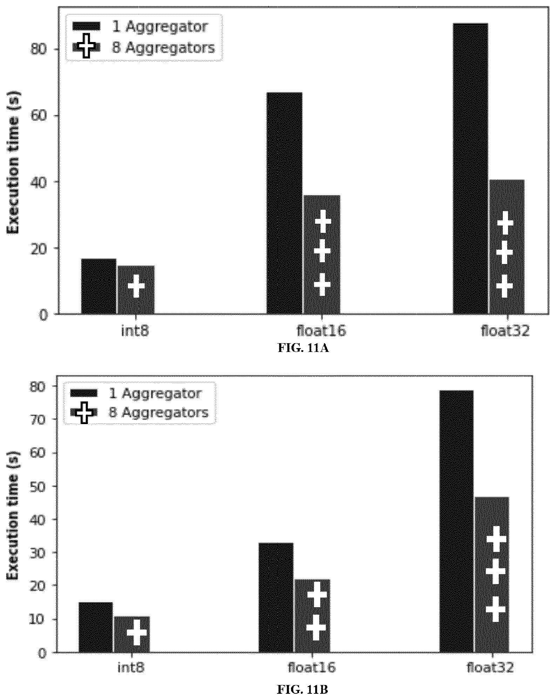

**Effect of optimization techniques:** FIGS. 10A and 10B depict the effect of changing the data type of gradient vectors on the execution time of the workloads. In comparison to the float32 gradient data type, the int8 datatype of gradient vectors shows an improvement of 3.1X, 2X, and 5.2X in the execution time of 80 mini-batches using Memcached, S3, and DynamoDB, respectively. FIGS. 11 A and 11B shows the effect of using multiple aggregators for gradient aggregation on communication overhead and hence the total execution time with DynamoDB. This figure shows a reduction of 1.2X, 1.8X, 2.2X for NISER and 1.5X, 1.5X, 1.7X for MobileNet using int8, float16, and float32 data types.

Based on our experimental evaluation, it can be concluded that large deep learning models can be trained using serverless architecture with data management services especially databases where there are constraints on the size of the data item to store. Optimization techniques help improve the performance and cost of serverless training using data storage services by reducing the communication overhead.

Thus, the system and method disclosed herein provide a framework and a technique for distributed deep learning using serverless platforms and communication channels available on cloud. Specifically, when the gradients of models are larger than the data item size of the data storage used as communication channel. Optimization techniques are provided to mitigate the communication overhead due to the frequent sharing of model updates between the serverless instances (peers) in a distributed environment. The optimization techniques such as multi-threading, multiple aggregators, data types etc. with communication channels results in a significant improvement in the performance and the cost of training.

The written description describes the subject matter herein to enable any person skilled in the art to make and use the embodiments. The scope of the subject matter embodiments is defined by the claims and may include other modifications that occur to those skilled in the art.

Disclosed herein are a program and in addition a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for training large Deep Learning (DL) models using a serverless architecture, the method comprising:
spawning (302), by one or more hardware processors, a plurality of serverless instances defining a plurality of workers; and
training (304) a DL model by the plurality of workers executed by the one or more hardware processors, by partitioning a training data among the plurality of workers, wherein the partitioned training data is split into a plurality of mini batches and utilized sequentially during iterative execution of a plurality of training instances, until the plurality of mini batches are exhausted, the iterative execution of the plurality of training instances comprising:
initiating (304a) a current training instance among the plurality of training instances by each of the plurality of workers using a current mini-batch among the plurality of mini batches and generating a plurality of trained local DL models;
chunking (304b), by each of the plurality of workers, each of the plurality of trained local DL models into a plurality of segments based on having a segment size determined based on a model size of each of the plurality of trained local DL models and a maximum size of one data item allowed in a cloud storage services-based communication channel;
writing (304c), the plurality of segments corresponding to each of the plurality of trained local DL models to the cloud storage services-based communication channel in accordance with the maximum size of one data item allowed in the cloud storage services-based communication channel;
aggregating (304d), by one or more aggregators, corresponding segments of each of the plurality of segments of each of the plurality of trained local DL models to generate a plurality of aggregated segment level DL models;
writing (304e) the plurality of aggregated segment level DL models into the cloud storage services-based communication channel; and
concurrently reading and concatenating (304f), the plurality of aggregated segment level DL models by each of the plurality of workers to obtain an aggregated model generated by the current training instance, wherein the aggregated model is used by each of the plurality of workers during the successive training instances using a successive mini batch,
estimating performance and cost of training the large Deep Learning (DL) models, wherein a cost of training of the DL model is provided by an analytical model, wherein the analytical model is configured to compute the cost in terms of a communication time *T_{c}* incurred during training, wherein the communication time *T_{c}* is computed based on: a size of each of a plurality of segments resulting from chunking each of the plurality of local DL models, a number of concurrent read and write threads used for transferring the plurality of segments, a maximum allowed batch size selected in accordance with a maximum size of one data item allowed by a cloud storage-based communication channel;
using one or more optimization techniques to accelerate communication between the plurality of workers and the cloud storage services-based communication channel, wherein the one or more optimization techniques comprises:
utilizing a plurality of tables for storing the plurality of segments of each of the plurality of trained local DL models, when the cloud storage based communication channel is a database storage,
utilizing the plurality of aggregators that read and write to the cloud storage services-based communication channel concurrently, reducing communication overhead,
writing the plurality of segments corresponding to each of the plurality of trained local DL models to the cloud services-based communication channel by creating batches of the plurality of segments and using multiple threads within each worker to transfer
the batches in parallel to the cloud storage services-based communication channel, and wherein multiple threads can leverage multiple cores available on each of the plurality of serverless instances, and
reducing a number of the plurality of segments created for each of the plurality of trained local DL models by converting data elements of each of the plurality of trained local DL models to float16 and int8 based on the DL model and value of range of the trained local DL model.

2. The method of claim 1, wherein the cloud storage services-based communication channel enables the plurality of workers to write the plurality of segments corresponding to each of the plurality of trained local DL models in parallel and read the plurality of aggregated segment level DL models in parallel and creates a number of homogeneous storage units equal to the number of the plurality of workers, wherein each of the plurality of workers concurrently writes one or more segments per homogenous storage unit.

3. A system (100) for training large Deep Learning (DL) models , the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
spawn a plurality of serverless instances defining a plurality of workers; and
train a DL model via the plurality of workers, by partitioning a training data among the plurality of workers, wherein the partitioned training data is split into a plurality of mini batches and utilized sequentially during iterative execution of a plurality of training instances, until the plurality of mini batches are exhausted, the iterative execution of the plurality of training instances comprising:
initiating a current training instance from among the plurality of training instances by each of the plurality of workers using a current mini-batch among the plurality of mini batches and generating a plurality of trained local DL models;
chunking, by each of the plurality of workers, each of the plurality of trained local DL models into a plurality of segments based on a model size of each of the plurality of trained local DL models and a maximum size of one data item allowed in a cloud storage services-based communication channel;
writing, the plurality of segments corresponding to each of the plurality of trained local DL models to the cloud storage services-based communication channel in accordance with the maximum size of one data item allowed in the cloud storage services-based communication channel;
aggregating, by one or more aggregators, corresponding segments of each of the plurality of segments of each of the plurality of trained local DL models to generate a plurality of aggregated segment level DL models;
writing, by one or more aggregators, the plurality of aggregated segment level DL models into the cloud storage services-based communication channel; and
concurrently reading and concatenating, the plurality of aggregated segment level DL models by each of the plurality of workers to obtain an aggregated model generated by the current training instance, wherein the aggregated model is used by each of the plurality of workers during the successive training instances using a successive mini batch,
estimate performance and cost of training the large Deep Learning (DL) models, wherein a cost of training of the DL model is provided by an analytical model, wherein the analytical model is configured to compute the cost in terms of a communication time *T_{c}* incurred during training, wherein the communication time *T_{c}* is computed based on: a size of each of a plurality of segments resulting from chunking each of the plurality of local DL models, a number of concurrent read and write threads used for transferring the plurality of segments, a maximum allowed batch size selected in accordance with a maximum size of one data item allowed by a cloud storage-based communication channel;
and
use one or more optimization techniques to accelerate communication between the plurality of workers and the cloud storage services-based communication channel, wherein the one or more optimization techniques comprises:
utilizing a plurality of tables for storing the plurality of segments of each of the plurality of trained local DL models, when the cloud storage based communication channel is a database storage,
utilizing the plurality of aggregators that read and write to the cloud storage services-based communication channel concurrently, reducing communication overhead,
writing the plurality of segments corresponding to each of the plurality of trained local DL models to the cloud services-based communication channel by creating batches of the plurality of segments and using multiple threads within each worker to transfer
the batches in parallel to the cloud storage services-based communication channel, and wherein multiple threads can leverage multiple cores available on each of the plurality of serverless instances, and
reducing a number of the plurality of segments created for each of the plurality of trained local DL models by converting data elements of each of the plurality of trained local DL models to float16 and int8 based on the DL model and value of range of the trained local DL model.

4. The system (100) of claim 3, wherein the cloud storage services-based communication channel enables the plurality of workers to write the plurality of segments corresponding to each of the plurality of trained local DL models in parallel and read the plurality of aggregated segment level DL models in parallel and creates a number of homogeneous storage units equal to the number of the plurality of workers, wherein each of the plurality of workers concurrently writes one or more segments per homogenous storage unit.

5. One or more non-transitory machine-readable information storage mediums comprising one or more instructions which when executed by one or more hardware processors cause:
spawning a plurality of serverless instances defining a plurality of workers; and
training a DL model by the plurality of workers executed by one or more hardware processors, by partitioning a training data among the plurality of workers, wherein the partitioned training data is split into a plurality of mini batches and utilized sequentially during iterative execution of a plurality of training instances, until the plurality of mini batches are exhausted, the iterative execution of the plurality of training instances comprising:
initiating a current training instance among the plurality of training instances by each of the plurality of workers using a current mini-batch among the plurality of mini batches and generating a plurality of trained local DL models;
chunking by each of the plurality of workers, each of the plurality of trained local DL models into a plurality of segments based on a model size of each of the plurality of trained local DL models and a maximum size of one data item allowed in a cloud storage services-based communication channel;
writing the plurality of segments corresponding to each of the plurality of trained local DL models to the cloud storage services-based communication channel in accordance with the maximum size of one data item allowed in the cloud storage services-based communication channel;
aggregating by one or more aggregators, corresponding segments of each of the plurality of segments of each of the plurality of trained local DL models to generate a plurality of aggregated segment level DL models;
writing the plurality of aggregated segment level DL models into the cloud storage services-based communication channel; and
concurrently reading and concatenating the plurality of aggregated segment level DL models by each of the plurality of workers to obtain an aggregated model generated by the current training instance, wherein the aggregated model is used by each of the plurality of workers during the successive training instances using a successive mini batch,
estimating performance and cost of training the large Deep Learning (DL) models, wherein a cost of training of the DL model is provided by an analytical model,
wherein the analytical model is configured to compute the cost in terms of a communication time T_{c} incurred during training, wherein the communication time T_{c} is computed based on:
a size of each of a plurality of segments resulting from chunking each of the plurality of local DL models, a number of concurrent read and write threads used for transferring the plurality of segments, a maximum allowed batch size selected in accordance with a maximum size of one data item allowed by a cloud storage based communication channel;
and
using one or more optimization techniques to accelerate communication between the plurality of workers and the cloud storage services-based communication channel, wherein the one or more optimization techniques comprises:
utilizing a plurality of tables for storing the plurality of segments of each of the plurality of trained local DL models, when the cloud storage based communication channel is a database storage,
utilizing the plurality of aggregators that read and write to the cloud storage services-based communication channel concurrently, reducing communication overhead,
writing the plurality of segments corresponding to each of the plurality of trained local DL models to the cloud services-based communication channel by creating batches of the plurality of segments and using multiple threads within each worker to transfer the batches in parallel to the cloud storage services-based communication channel, and wherein multiple threads can leverage multiple cores available on each of the plurality of serverless instances, and
reducing a number of the plurality of segments created for each of the plurality of trained local DL models by converting data elements of each of the plurality of trained local DL models to float16 and int8 based on the DL model and value of range of the trained local DL model.

6. The one or more non-transitory machine-readable information storage mediums of claim 5, wherein the cloud storage services-based communication channel enables the plurality of workers to write the plurality of segments corresponding to each of the plurality of trained local DL models in parallel and read the plurality of aggregated segment level DL models in parallel and creates a number of homogeneous storage units equal to the number of the plurality of workers, wherein each of the plurality of workers concurrently writes one or more segments per homogenous storage unit.

## Patentansprüche

1. Prozessorimplementiertes Verfahren (300) zum Trainieren von großen Deep-Learning(DL)-Modellen unter Verwendung einer serverlosen Architektur, wobei das Verfahren Folgendes umfasst:
Erzeugen (302), durch einen oder mehrere Hardwareprozessoren, einer Mehrzahl von serverlosen Instanzen, die eine Mehrzahl von Arbeitern definieren; und
Trainieren (304) eines DL-Modells durch die Mehrzahl von Arbeitern, die durch den einen oder die mehreren Hardwareprozessoren ausgeführt werden, durch Partitionieren von Trainingsdaten unter der Mehrzahl von Arbeitern, wobei die partitionierten Trainingsdaten in eine Mehrzahl von Minichargen aufgeteilt und während der iterativen Ausführung einer Mehrzahl von Trainingsinstanzen sequenziell verwendet werden, bis die Mehrzahl von Minichargen erschöpft ist, wobei die iterative Ausführung der Mehrzahl von Trainingsinstanzen Folgendes umfasst:
Initiieren (304a) einer aktuellen Trainingsinstanz unter der Mehrzahl von Trainingsinstanzen durch jeden der Mehrzahl von Arbeitern unter Verwendung einer aktuellen Minicharge unter der Mehrzahl von Minichargen und Erzeugen einer Mehrzahl von trainierten lokalen DL-Modellen;
Aufteilen (304b), durch jeden der Mehrzahl von Arbeitern, jedes der Mehrzahl von trainierten lokalen DL-Modellen in eine Mehrzahl von Segmenten basierend darauf, dass eine Segmentgröße basierend auf Folgendem bestimmt wird: einer Modellgröße jedes der Mehrzahl von trainierten lokalen DL-Modellen und einer maximalen Größe eines Datenelements, das in einem auf Cloud-Speicherdiensten basierenden Kommunikationskanal zulässig ist;
Schreiben (304c) der Mehrzahl von Segmenten, die jedem der Mehrzahl von trainierten lokalen DL-Modellen entsprechen, in den auf Cloud-Speicherdiensten basierenden Kommunikationskanal gemäß der maximalen Größe eines Datenelements, das in dem auf Cloud-Speicherdiensten basierenden Kommunikationskanal zulässig ist;
Aggregieren (304d), durch einen oder mehrere Aggregatoren, von entsprechenden Segmenten jedes der Mehrzahl von Segmenten jedes der Mehrzahl von trainierten lokalen DL-Modellen, um eine Mehrzahl von aggregierten Segmentebenen-DL-Modellen zu erzeugen;
Schreiben (304e) der Mehrzahl von aggregierten Segmentebenen-DL-Modellen in den auf Cloud-Speicherdiensten basierenden Kommunikationskanal; und
gleichzeitiges Lesen und Verketten (304f) der Mehrzahl von aggregierten Segmentebenen-DL-Modellen durch jeden der Mehrzahl von Arbeitern, um ein aggregiertes Modell zu erhalten, das durch die aktuelle Trainingsinstanz erzeugt wird, wobei das aggregierte Modell durch jeden der Mehrzahl von Arbeitern während der aufeinanderfolgenden Trainingsinstanzen unter Verwendung einer aufeinanderfolgenden Minicharge verwendet wird,
Schätzen von Leistung und Kosten des Trainierens der großen Deep-Learning(DL)-Modelle, wobei Kosten des Trainierens des DL-Modells durch ein analytisches Modell bereitgestellt werden, wobei das analytische Modell konfiguriert ist, um die Kosten in Bezug auf eine Kommunikationszeit *T_{c}* zu berechnen, die während des Trainings angefallen ist, wobei die Kommunikationszeit *T_{c}* basierend auf Folgendem berechnet wird: einer Größe jedes einer Mehrzahl von Segmenten, die aus dem Aufteilen jedes der Mehrzahl von lokalen DL-Modellen resultiert, einer Anzahl von gleichzeitigen Lese- und Schreib-Threads, die zum Übertragen der Mehrzahl von Segmenten verwendet werden, einer maximal zulässigen Chargengröße, die gemäß einer maximalen Größe eines Datenelements ausgewählt wird, das durch einen auf Cloud-Speicherung basierenden Kommunikationskanal zulässig ist; und
Verwenden einer oder mehrerer Optimierungstechniken, um die Kommunikation zwischen der Mehrzahl von Arbeitern und dem auf Cloud-Speicherdiensten basierenden Kommunikationskanal zu beschleunigen, wobei die eine oder die mehreren Optimierungstechniken Folgendes umfassen:
Verwenden einer Mehrzahl von Tabellen zum Speichern der Mehrzahl von Segmenten jedes der Mehrzahl von trainierten lokalen DL-Modellen, wenn der auf Cloud-Speicherung basierende Kommunikationskanal ein Datenbankspeicher ist,
Verwenden der Mehrzahl von Aggregatoren, die den auf Cloud-Speicherdiensten basierenden Kommunikationskanal gleichzeitig lesen und schreiben, wodurch der Kommunikationsaufwand reduziert wird,
Schreiben der Mehrzahl von Segmenten, die jedem der Mehrzahl von trainierten lokalen DL-Modellen entsprechen, in den auf Cloud-Speicherdiensten basierenden Kommunikationskanal durch Erzeugen von Chargen der Mehrzahl von Segmenten und Verwenden mehrerer Threads innerhalb jedes Arbeiters, um die Chargen parallel zu dem auf Cloud-Speicherdiensten basierenden Kommunikationskanal zu übertragen, und wobei mehrere Threads mehrere Kerne nutzen können, die auf jeder der Mehrzahl von serverlosen Instanzen verfügbar sind, und
Reduzieren einer Anzahl der Mehrzahl von Segmenten, die für jedes der Mehrzahl von trainierten lokalen DL-Modellen erzeugt werden, durch Umwandeln von Datenelementen jedes der Mehrzahl von trainierten lokalen DL-Modellen in float16 und int8 basierend auf dem DL-Modell und dem Wert des Bereichs des trainierten lokalen DL-Modells.

2. Verfahren nach Anspruch 1, wobei der auf Cloud-Speicherdiensten basierende Kommunikationskanal es der Mehrzahl von Arbeitern ermöglicht, die Mehrzahl von Segmenten, die jedem der Mehrzahl von trainierten lokalen DL-Modellen entsprechen, parallel zu schreiben und die Mehrzahl von aggregierten Segmentebenen-DL-Modellen parallel zu lesen, und eine Anzahl von homogenen Speichereinheiten erzeugt, die gleich der Anzahl der Mehrzahl von Arbeitern ist, wobei jeder der Mehrzahl von Arbeitern gleichzeitig ein oder mehrere Segmente pro homogener Speichereinheit schreibt.

3. System (100) zum Trainieren von großen Deep-Learning(DL)-Modellen, wobei das System (100) Folgendes umfasst:
einen Speicher (102), der Anweisungen speichert;
eine oder mehrere Eingabe/Ausgabe(E/A)-Schnittstellen (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:
Erzeugen einer Mehrzahl von serverlosen Instanzen, die eine Mehrzahl von Arbeitern definieren; und
Trainieren eines DL-Modells über die Mehrzahl von Arbeitern durch Partitionieren von Trainingsdaten unter der Mehrzahl von Arbeitern, wobei die partitionierten Trainingsdaten in eine Mehrzahl von Minichargen aufgeteilt und während der iterativen Ausführung einer Mehrzahl von Trainingsinstanzen sequenziell verwendet werden, bis die Mehrzahl von Minichargen erschöpft ist, wobei die iterative Ausführung der Mehrzahl von Trainingsinstanzen Folgendes umfasst:
Initiieren einer aktuellen Trainingsinstanz unter der Mehrzahl von Trainingsinstanzen durch jeden der Mehrzahl von Arbeitern unter Verwendung einer aktuellen Minicharge unter der Mehrzahl von Minichargen und Erzeugen einer Mehrzahl von trainierten lokalen DL-Modellen;
Aufteilen, durch jeden der Mehrzahl von Arbeitern, jedes der Mehrzahl von trainierten lokalen DL-Modellen in eine Mehrzahl von Segmenten basierend auf einer Modellgröße jedes der Mehrzahl von trainierten lokalen DL-Modellen und einer maximalen Größe eines Datenelements, das in einem auf Cloud-Speicherdiensten basierenden Kommunikationskanal zulässig ist;
Schreiben der Mehrzahl von Segmenten, die jedem der Mehrzahl von trainierten lokalen DL-Modellen entsprechen, in den auf Cloud-Speicherdiensten basierenden Kommunikationskanal gemäß der maximalen Größe eines Datenelements, das in dem auf Cloud-Speicherdiensten basierenden Kommunikationskanal zulässig ist;
Aggregieren, durch einen oder mehrere Aggregatoren, von entsprechenden Segmenten jedes der Mehrzahl von Segmenten jedes der Mehrzahl von trainierten lokalen DL-Modellen, um eine Mehrzahl von aggregierten Segmentebenen-DL-Modellen zu erzeugen;
Schreiben, durch einen oder mehrere Aggregatoren, der Mehrzahl von aggregierten Segmentebenen-DL-Modellen in den auf Cloud-Speicherdiensten basierenden Kommunikationskanal; und
gleichzeitiges Lesen und Verketten der Mehrzahl von aggregierten Segmentebenen-DL-Modellen durch jeden der Mehrzahl von Arbeitern, um ein aggregiertes Modell zu erhalten, das durch die aktuelle Trainingsinstanz erzeugt wird, wobei das aggregierte Modell durch jeden der Mehrzahl von Arbeitern während der aufeinanderfolgenden Trainingsinstanzen unter Verwendung einer aufeinanderfolgenden Minicharge verwendet wird,
Schätzen von Leistung und Kosten des Trainierens der großen Deep-Learning(DL)-Modelle, wobei Kosten des Trainierens des DL-Modells durch ein analytisches Modell bereitgestellt werden, wobei das analytische Modell konfiguriert ist, um die Kosten in Bezug auf eine Kommunikationszeit *T_{c}* zu berechnen, die während des Trainings angefallen ist, wobei die Kommunikationszeit *T_{c}* basierend auf Folgendem berechnet wird: einer Größe jedes einer Mehrzahl von Segmenten, die aus dem Aufteilen jedes der Mehrzahl von lokalen DL-Modellen resultiert, einer Anzahl von gleichzeitigen Lese- und Schreib-Threads, die zum Übertragen der Mehrzahl von Segmenten verwendet werden, einer maximal zulässigen Chargengröße, die gemäß einer maximalen Größe eines Datenelements ausgewählt wird, das durch einen auf Cloud-Speicherung basierenden Kommunikationskanal zulässig ist; und
Verwenden einer oder mehrerer Optimierungstechniken, um die Kommunikation zwischen der Mehrzahl von Arbeitern und dem auf Cloud-Speicherdiensten basierenden Kommunikationskanal zu beschleunigen, wobei die eine oder die mehreren Optimierungstechniken Folgendes umfassen:
Verwenden einer Mehrzahl von Tabellen zum Speichern der Mehrzahl von Segmenten jedes der Mehrzahl von trainierten lokalen DL-Modellen, wenn der auf Cloud-Speicherung basierende Kommunikationskanal ein Datenbankspeicher ist,
Verwenden der Mehrzahl von Aggregatoren, die den auf Cloud-Speicherdiensten basierenden Kommunikationskanal gleichzeitig lesen und schreiben, wodurch der Kommunikationsaufwand reduziert wird,
Schreiben der Mehrzahl von Segmenten, die jedem der Mehrzahl von trainierten lokalen DL-Modellen entsprechen, in den auf Cloud-Speicherdiensten basierenden Kommunikationskanal durch Erzeugen von Chargen der Mehrzahl von Segmenten und Verwenden mehrerer Threads innerhalb jedes Arbeiters, um die Chargen parallel zu dem auf Cloud-Speicherdiensten basierenden Kommunikationskanal zu übertragen, und wobei mehrere Threads mehrere Kerne nutzen können, die auf jeder der Mehrzahl von serverlosen Instanzen verfügbar sind, und
Reduzieren einer Anzahl der Mehrzahl von Segmenten, die für jedes der Mehrzahl von trainierten lokalen DL-Modellen erzeugt werden, durch Umwandeln von Datenelementen jedes der Mehrzahl von trainierten lokalen DL-Modellen in float16 und int8 basierend auf dem DL-Modell und dem Wert des Bereichs des trainierten lokalen DL-Modells.

4. System (100) nach Anspruch 3, wobei der auf Cloud-Speicherdiensten basierende Kommunikationskanal es der Mehrzahl von Arbeitern ermöglicht, die Mehrzahl von Segmenten, die jedem der Mehrzahl von trainierten lokalen DL-Modellen entsprechen, parallel zu schreiben und die Mehrzahl von aggregierten Segmentebenen-DL-Modellen parallel zu lesen, und eine Anzahl von homogenen Speichereinheiten erzeugt, die gleich der Anzahl der Mehrzahl von Arbeitern ist, wobei jeder der Mehrzahl von Arbeitern gleichzeitig ein oder mehrere Segmente pro homogener Speichereinheit schreibt.

5. Ein oder mehrere nichtflüchtige maschinenlesbare Informationsspeichermedien, die eine oder mehrere Anweisungen umfassen, die, wenn sie durch einen oder mehrere Hardwareprozessoren ausgeführt werden, Folgendes bewirken:
Erzeugen einer Mehrzahl von serverlosen Instanzen, die eine Mehrzahl von Arbeitern definieren; und
Trainieren eines DL-Modells durch die Mehrzahl von Arbeitern, die durch einen oder mehrere Hardwareprozessoren ausgeführt werden, durch Partitionieren von Trainingsdaten unter der Mehrzahl von Arbeitern, wobei die partitionierten Trainingsdaten in eine Mehrzahl von Minichargen aufgeteilt und während der iterativen Ausführung einer Mehrzahl von Trainingsinstanzen sequenziell verwendet werden, bis die Mehrzahl von Minichargen erschöpft ist, wobei die iterative Ausführung der Mehrzahl von Trainingsinstanzen Folgendes umfasst:
Initiieren einer aktuellen Trainingsinstanz unter der Mehrzahl von Trainingsinstanzen durch jeden der Mehrzahl von Arbeitern unter Verwendung einer aktuellen Minicharge unter der Mehrzahl von Minichargen und Erzeugen einer Mehrzahl von trainierten lokalen DL-Modellen;
Aufteilen, durch jeden der Mehrzahl von Arbeitern, jedes der Mehrzahl von trainierten lokalen DL-Modellen in eine Mehrzahl von Segmenten basierend auf einer Modellgröße jedes der Mehrzahl von trainierten lokalen DL-Modellen und einer maximalen Größe eines Datenelements, das in einem auf Cloud-Speicherdiensten basierenden Kommunikationskanal zulässig ist;
Schreiben der Mehrzahl von Segmenten, die jedem der Mehrzahl von trainierten lokalen DL-Modellen entsprechen, in den auf Cloud-Speicherdiensten basierenden Kommunikationskanal gemäß der maximalen Größe eines Datenelements, das in dem auf Cloud-Speicherdiensten basierenden Kommunikationskanal zulässig ist;
Aggregieren, durch einen oder mehrere Aggregatoren, von entsprechenden Segmenten jedes der Mehrzahl von Segmenten jedes der Mehrzahl von trainierten lokalen DL-Modellen, um eine Mehrzahl von aggregierten Segmentebenen-DL-Modellen zu erzeugen;
Schreiben der Mehrzahl von aggregierten Segmentebenen-DL-Modellen in den auf Cloud-Speicherdiensten basierenden Kommunikationskanal; und
gleichzeitiges Lesen und Verketten der Mehrzahl von aggregierten Segmentebenen-DL-Modellen durch jeden der Mehrzahl von Arbeitern, um ein aggregiertes Modell zu erhalten, das durch die aktuelle Trainingsinstanz erzeugt wird, wobei das aggregierte Modell durch jeden der Mehrzahl von Arbeitern während der aufeinanderfolgenden Trainingsinstanzen unter Verwendung einer aufeinanderfolgenden Minicharge verwendet wird,
Schätzen von Leistung und Kosten des Trainierens der großen Deep-Learning(DL)-Modelle, wobei Kosten des Trainierens des DL-Modells durch ein analytisches Modell bereitgestellt werden,
wobei das analytische Modell konfiguriert ist, um die Kosten in Bezug auf eine Kommunikationszeit T_{c} zu berechnen, die während des Trainings angefallen ist, wobei die Kommunikationszeit T_{c} basierend auf Folgendem berechnet wird:
einer Größe jedes einer Mehrzahl von Segmenten, die aus dem Aufteilen jedes der Mehrzahl von lokalen DL-Modellen resultiert, einer Anzahl von gleichzeitigen Lese- und Schreib-Threads, die zum Übertragen der Mehrzahl von Segmenten verwendet werden, einer maximal zulässigen Chargengröße, die gemäß einer maximalen Größe eines Datenelements ausgewählt wird, das durch einen auf Cloud-Speicherung basierenden Kommunikationskanal zulässig ist, und einer Konfiguration des Kommunikationskanals; und
Verwenden einer oder mehrerer Optimierungstechniken, um die Kommunikation zwischen der Mehrzahl von Arbeitern und dem auf Cloud-Speicherdiensten basierenden Kommunikationskanal zu beschleunigen, wobei die eine oder die mehreren Optimierungstechniken Folgendes umfassen:
Verwenden einer Mehrzahl von Tabellen zum Speichern der Mehrzahl von Segmenten jedes der Mehrzahl von trainierten lokalen DL-Modellen, wenn der auf Cloud-Speicherung basierende Kommunikationskanal ein Datenbankspeicher ist,
Verwenden der Mehrzahl von Aggregatoren, die den auf Cloud-Speicherdiensten basierenden Kommunikationskanal gleichzeitig lesen und schreiben, wodurch der Kommunikationsaufwand reduziert wird,
Schreiben der Mehrzahl von Segmenten, die jedem der Mehrzahl von trainierten lokalen DL-Modellen entsprechen, in den auf Cloud-Speicherdiensten basierenden Kommunikationskanal durch Erzeugen von Chargen der Mehrzahl von Segmenten und Verwenden mehrerer Threads innerhalb jedes Arbeiters, um die Chargen parallel zu dem auf Cloud-Speicherdiensten basierenden Kommunikationskanal zu übertragen, und wobei mehrere Threads mehrere Kerne nutzen können, die auf jeder der Mehrzahl von serverlosen Instanzen verfügbar sind, und
Reduzieren einer Anzahl der Mehrzahl von Segmenten, die für jedes der Mehrzahl von trainierten lokalen DL-Modellen erzeugt werden, durch Umwandeln von Datenelementen jedes der Mehrzahl von trainierten lokalen DL-Modellen in float16 und int8 basierend auf dem DL-Modell und dem Wert des Bereichs des trainierten lokalen DL-Modells.

6. Ein oder mehrere nichtflüchtige maschinenlesbare Informationsspeichermedien nach Anspruch 5, wobei der auf Cloud-Speicherdiensten basierende Kommunikationskanal es der Mehrzahl von Arbeitern ermöglicht, die Mehrzahl von Segmenten, die jedem der Mehrzahl von trainierten lokalen DL-Modellen entsprechen, parallel zu schreiben und die Mehrzahl von aggregierten Segmentebenen-DL-Modellen parallel zu lesen, und eine Anzahl von homogenen Speichereinheiten erzeugt, die gleich der Anzahl der Mehrzahl von Arbeitern ist, wobei jeder der Mehrzahl von Arbeitern gleichzeitig ein oder mehrere Segmente pro homogener Speichereinheit schreibt.

## Revendications

1. Procédé mis en œuvre par processeur (300) pour entraîner de grands modèles d'apprentissage profond (DL) en utilisant une architecture serverless, le procédé comprenant :
le lancement (302), par un ou plusieurs processeurs matériels, d'une pluralité d'instances serverless définissant une pluralité de workers ; et
l'entraînement (304) d'un modèle DL par la pluralité de workers exécutés par les un ou plusieurs processeurs matériels, en partitionnant des données d'entraînement parmi la pluralité de workers, dans lequel les données d'entraînement partitionnées sont divisées en une pluralité de mini-lots et utilisées séquentiellement pendant l'exécution itérative d'une pluralité d'instances d'entraînement, jusqu'à ce que la pluralité de mini-lots soit épuisée, l'exécution itérative de la pluralité d'instances d'entraînement comprenant :
l'initiation (304a) d'une instance d'entraînement courante parmi la pluralité d'instances d'entraînement par chacun de la pluralité de workers en utilisant un mini-lot courant parmi la pluralité de mini-lots et la génération d'une pluralité de modèles DL locaux entraînés ;
le fractionnement (304b), par chacun de la pluralité de workers, de chacun de la pluralité de modèles DL locaux entraînés en une pluralité de segments sur la base du fait d'avoir une taille de segment déterminée sur la base de une taille de modèle de chacun de la pluralité de modèles DL locaux entraînés et une taille maximale d'un élément de données autorisé dans un canal de communication basé sur des services de stockage en nuage ;
l'écriture (304c), de la pluralité de segments correspondant à chacun de la pluralité de modèles DL locaux entraînés dans le canal de communication basé sur des services de stockage en nuage conformément à la taille maximale d'un élément de données autorisé dans le canal de communication basé sur des services de stockage en nuage ;
l'agrégation (304d), par un ou plusieurs agrégateurs, de segments correspondants de chacun de la pluralité de segments de chacun de la pluralité de modèles DL locaux entraînés pour générer une pluralité de modèles DL de niveau de segment agrégés ;
l'écriture (304e) de la pluralité de modèles DL de niveau de segment agrégés dans le canal de communication basé sur des services de stockage en nuage ; et
la lecture et la concaténation simultanées (304f), de la pluralité de modèles DL de niveau de segment agrégés par chacun de la pluralité de workers pour obtenir un modèle agrégé généré par l'instance d'entraînement courante, dans lequel le modèle agrégé est utilisé par chacun de la pluralité de workers pendant les instances d'entraînement successives en utilisant un mini-lot successif,
l'estimation de la performance et du coût d'entraînement des grands modèles d'apprentissage profond (DL), dans lequel un coût d'entraînement du modèle DL est fourni par un modèle analytique, dans lequel le modèle analytique est configuré pour calculer le coût en termes d'un temps de communication encouru pendant l'entraînement, dans lequel le temps de communication est calculé sur la base de : une taille de chacun d'une pluralité de segments résultant du fractionnement de chacun de la pluralité de modèles DL locaux, un nombre de threads de lecture et d'écriture simultanés utilisés pour transférer la pluralité de segments, une taille de lot maximale autorisée sélectionnée conformément à une taille maximale d'un élément de données autorisé par un canal de communication basé sur un stockage en nuage ; et
l'utilisation d'une ou plusieurs techniques d'optimisation pour accélérer la communication entre la pluralité de workers et le canal de communication basé sur des services de stockage en nuage, dans lequel les une ou plusieurs techniques d'optimisation comprennent :
l'utilisation d'une pluralité de tables pour stocker la pluralité de segments de chacun de la pluralité de modèles DL locaux entraînés, lorsque le canal de communication basé sur un stockage en nuage est un stockage de base de données,
l'utilisation de la pluralité d'agrégateurs qui lisent et écrivent dans le canal de communication basé sur des services de stockage en nuage simultanément, réduisant la surcharge de communication,
l'écriture de la pluralité de segments correspondant à chacun de la pluralité de modèles DL locaux entraînés dans le canal de communication basé sur des services de stockage en nuage en créant des lots de la pluralité de segments et en utilisant plusieurs threads au sein de chaque worker pour transférer les lots en parallèle dans le canal de communication basé sur des services de stockage en nuage, et dans lequel plusieurs threads peuvent tirer parti de multiples coeurs disponibles sur chacune de la pluralité d'instances serverless, et
la réduction d'un nombre de la pluralité de segments créés pour chacun de la pluralité de modèles DL locaux entraînés en convertissant des éléments de données de chacun de la pluralité de modèles DL locaux entraînés en float16 et int8 sur la base du modèle DL et de la plage de valeurs du modèle DL local entraîné.

2. Procédé selon la revendication 1, dans lequel le canal de communication basé sur des services de stockage en nuage permet à la pluralité de workers d'écrire la pluralité de segments correspondant à chacun de la pluralité de modèles DL locaux entraînés en parallèle et de lire la pluralité de modèles DL de niveau de segment agrégés en parallèle et crée un nombre d'unités de stockage homogènes égal au nombre de la pluralité de workers, dans lequel chacun de la pluralité de workers écrit simultanément un ou plusieurs segments par unité de stockage homogène.

3. Système (100) pour entraîner de grands modèles d'apprentissage profond (DL), le système (100) comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
lancer une pluralité d'instances serverless définissant une pluralité de workers ; et
entraîner un modèle DL via la pluralité de workers, en partitionnant des données d'entraînement parmi la pluralité de workers, dans lequel les données d'entraînement partitionnées sont divisées en une pluralité de mini-lots et utilisées séquentiellement pendant l'exécution itérative d'une pluralité d'instances d'entraînement, jusqu'à ce que la pluralité de mini-lots soit épuisée, l'exécution itérative de la pluralité d'instances d'entraînement comprenant :
l'initiation d'une instance d'entraînement courante parmi la pluralité d'instances d'entraînement par chacun de la pluralité de workers en utilisant un mini-lot courant parmi la pluralité de mini-lots et la génération d'une pluralité de modèles DL locaux entraînés ;
le fractionnement, par chacun de la pluralité de workers, de chacun de la pluralité de modèles DL locaux entraînés en une pluralité de segments sur la base d'une taille de modèle de chacun de la pluralité de modèles DL locaux entraînés et d'une taille maximale d'un élément de données autorisé dans un canal de communication basé sur des services de stockage en nuage ;
l'écriture, de la pluralité de segments correspondant à chacun de la pluralité de modèles DL locaux entraînés dans le canal de communication basé sur des services de stockage en nuage conformément à la taille maximale d'un élément de données autorisé dans le canal de communication basé sur des services de stockage en nuage ;
l'agrégation, par un ou plusieurs agrégateurs, de segments correspondants de chacun de la pluralité de segments de chacun de la pluralité de modèles DL locaux entraînés pour générer une pluralité de modèles DL de niveau de segment agrégés ;
l'écriture, par un ou plusieurs agrégateurs, de la pluralité de modèles DL de niveau de segment agrégés dans le canal de communication basé sur des services de stockage en nuage ; et
la lecture et la concaténation simultanées, de la pluralité de modèles DL de niveau de segment agrégés par chacun de la pluralité de workers pour obtenir un modèle agrégé généré par l'instance d'entraînement courante, dans lequel le modèle agrégé est utilisé par chacun de la pluralité de workers pendant les instances d'entraînement successives en utilisant un mini-lot successif,
l'estimation de la performance et du coût d'entraînement des grands modèles d'apprentissage profond (DL), dans lequel un coût d'entraînement du modèle DL est fourni par un modèle analytique, dans lequel le modèle analytique est configuré pour calculer le coût en termes d'un temps de communication encouru pendant l'entraînement, dans lequel le temps de communication est calculé sur la base de : une taille de chacun d'une pluralité de segments résultant du fractionnement de chacun de la pluralité de modèles DL locaux, un nombre de threads de lecture et d'écriture simultanés utilisés pour transférer la pluralité de segments, une taille de lot maximale autorisée sélectionnée conformément à une taille maximale d'un élément de données autorisé par un canal de communication basé sur un stockage en nuage ; et
l'utilisation d'une ou plusieurs techniques d'optimisation pour accélérer la communication entre la pluralité de workers et le canal de communication basé sur des services de stockage en nuage, dans lequel les une ou plusieurs techniques d'optimisation comprennent :
l'utilisation d'une pluralité de tables pour stocker la pluralité de segments de chacun de la pluralité de modèles DL locaux entraînés, lorsque le canal de communication basé sur un stockage en nuage est un stockage de base de données,
l'utilisation de la pluralité d'agrégateurs qui lisent et écrivent dans le canal de communication basé sur des services de stockage en nuage simultanément, réduisant la surcharge de communication,
l'écriture de la pluralité de segments correspondant à chacun de la pluralité de modèles DL locaux entraînés dans le canal de communication basé sur des services de stockage en nuage en créant des lots de la pluralité de segments et en utilisant plusieurs threads au sein de chaque worker pour transférer les lots en parallèle dans le canal de communication basé sur des services de stockage en nuage, et dans lequel plusieurs threads peuvent tirer parti de multiples coeurs disponibles sur chacune de la pluralité d'instances serverless, et
la réduction d'un nombre de la pluralité de segments créés pour chacun de la pluralité de modèles DL locaux entraînés en convertissant des éléments de données de chacun de la pluralité de modèles DL locaux entraînés en float16 et int8 sur la base du modèle DL et de la plage de valeurs du modèle DL local entraîné.

4. Système (100) selon la revendication 3, dans lequel le canal de communication basé sur des services de stockage en nuage permet à la pluralité de workers d'écrire la pluralité de segments correspondant à chacun de la pluralité de modèles DL locaux entraînés en parallèle et de lire la pluralité de modèles DL de niveau de segment agrégés en parallèle et crée un nombre d'unités de stockage homogènes égal au nombre de la pluralité de workers, dans lequel chacun de la pluralité de workers écrit simultanément un ou plusieurs segments par unité de stockage homogène.

5. Un ou plusieurs supports de stockage d'informations lisibles par machine non transitoires comprenant une ou plusieurs instructions qui, lorsqu'elles sont exécutées par un ou plusieurs processeurs matériels, amènent :
le lancement d'une pluralité d'instances serverless définissant une pluralité de workers ; et
l'entraînement d'un modèle DL par la pluralité de workers exécutés par un ou plusieurs processeurs matériels, en partitionnant des données d'entraînement parmi la pluralité de workers, dans lequel les données d'entraînement partitionnées sont divisées en une pluralité de mini-lots et utilisées séquentiellement pendant l'exécution itérative d'une pluralité d'instances d'entraînement, jusqu'à ce que la pluralité de mini-lots soit épuisée, l'exécution itérative de la pluralité d'instances d'entraînement comprenant :
l'initiation d'une instance d'entraînement courante parmi la pluralité d'instances d'entraînement par chacun de la pluralité de workers en utilisant un mini-lot courant parmi la pluralité de mini-lots et la génération d'une pluralité de modèles DL locaux entraînés ;
le fractionnement, par chacun de la pluralité de workers, de chacun de la pluralité de modèles DL locaux entraînés en une pluralité de segments sur la base d'une taille de modèle de chacun de la pluralité de modèles DL locaux entraînés et d'une taille maximale d'un élément de données autorisé dans un canal de communication basé sur des services de stockage en nuage ;
l'écriture de la pluralité de segments correspondant à chacun de la pluralité de modèles DL locaux entraînés dans le canal de communication basé sur des services de stockage en nuage conformément à la taille maximale d'un élément de données autorisé dans le canal de communication basé sur des services de stockage en nuage ;
l'agrégation, par un ou plusieurs agrégateurs, de segments correspondants de chacun de la pluralité de segments de chacun de la pluralité de modèles DL locaux entraînés pour générer une pluralité de modèles DL de niveau de segment agrégés ;
l'écriture de la pluralité de modèles DL de niveau de segment agrégés dans le canal de communication basé sur des services de stockage en nuage ; et
la lecture et la concaténation simultanées de la pluralité de modèles DL de niveau de segment agrégés par chacun de la pluralité de workers pour obtenir un modèle agrégé généré par l'instance d'entraînement courante, dans lequel le modèle agrégé est utilisé par chacun de la pluralité de workers pendant les instances d'entraînement successives en utilisant un mini-lot successif,
l'estimation de la performance et du coût d'entraînement des grands modèles d'apprentissage profond (DL), dans lequel un coût d'entraînement du modèle DL est fourni par un modèle analytique,
dans lequel le modèle analytique est configuré pour calculer le coût en termes d'un temps de communication Tc encouru pendant l'entraînement, dans lequel le temps de communication Tc est calculé sur la base de :
une taille de chacun d'une pluralité de segments résultant du fractionnement de chacun de la pluralité de modèles DL locaux, un nombre de threads de lecture et d'écriture simultanés utilisés pour transférer la pluralité de segments, une taille de lot maximale autorisée sélectionnée conformément à une taille maximale d'un élément de données autorisé par un canal de communication basé sur un stockage en nuage, et une configuration du canal de communication ; et
l'utilisation d'une ou plusieurs techniques d'optimisation pour accélérer la communication entre la pluralité de workers et le canal de communication basé sur des services de stockage en nuage, dans lequel les une ou plusieurs techniques d'optimisation comprennent :
l'utilisation d'une pluralité de tables pour stocker la pluralité de segments de chacun de la pluralité de modèles DL locaux entraînés, lorsque le canal de communication basé sur un stockage en nuage est un stockage de base de données,
l'utilisation de la pluralité d'agrégateurs qui lisent et écrivent dans le canal de communication basé sur des services de stockage en nuage simultanément, réduisant la surcharge de communication,
l'écriture de la pluralité de segments correspondant à chacun de la pluralité de modèles DL locaux entraînés dans le canal de communication basé sur des services de stockage en nuage en créant des lots de la pluralité de segments et en utilisant plusieurs threads au sein de chaque worker pour transférer les lots en parallèle dans le canal de communication basé sur des services de stockage en nuage, et dans lequel plusieurs threads peuvent tirer parti de multiples coeurs disponibles sur chacune de la pluralité d'instances serverless, et
la réduction d'un nombre de la pluralité de segments créés pour chacun de la pluralité de modèles DL locaux entraînés en convertissant des éléments de données de chacun de la pluralité de modèles DL locaux entraînés en float16 et int8 sur la base du modèle DL et de la plage de valeurs du modèle DL local entraîné.
[

6. Un ou plusieurs supports de stockage d'informations lisibles par machine non transitoires selon la revendication 5, dans lequel le canal de communication basé sur des services de stockage en nuage permet à la pluralité de workers d'écrire la pluralité de segments correspondant à chacun de la pluralité de modèles DL locaux entraînés en parallèle et de lire la pluralité de modèles DL de niveau de segment agrégés en parallèle et crée un nombre d'unités de stockage homogènes égal au nombre de la pluralité de workers, dans lequel chacun de la pluralité de workers écrit simultanément un ou plusieurs segments par unité de stockage homogène.
